(19) Europäisches Patentamt
European Patent Office
Office européen des brevets

(11) **EP 4 350 536 A1**

(12) # EUROPEAN PATENT APPLICATION
published in accordance with Art. 153(4) EPC

(43) Date of publication:
**10.04.2024 Bulletin 2024/15**

(21) Application number: **23735954.2**

(22) Date of filing: **19.01.2023**

(51) International Patent Classification (IPC):
**G06F 17/18** $^{(2006.01)}$     **G01J 9/02** $^{(2006.01)}$

(86) International application number:
**PCT/CN2023/073108**

(87) International publication number:
**WO 2024/036885 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.08.2022 CN 202210986603**

(71) Applicants:
• **Changchun University of Science and Technology**
  **Changchun, Jilin 130022 (CN)**
• **Zhongshan Institute of Changchun University of Science and Technology**
  **Zhongshan, Guangdong 528437 (CN)**
• **Chengdu Loong Optoelectronic Technology Co., Ltd**
  **Chengdu, Sichuan 610037 (CN)**

(72) Inventors:
• **XUE, Junwen**
  **Changchun, Jilin 130022 (CN)**

• **LI, Lijuan**
  **Changchun, Jilin 130022 (CN)**
• **ZHU, Lili**
  **Changchun, Jilin 130022 (CN)**
• **REN, Jiaojiao**
  **Changchun, Jilin 130022 (CN)**
• **ZHANG, Dandan**
  **Changchun, Jilin 130022 (CN)**
• **GU, Jian**
  **Changchun, Jilin 130022 (CN)**
• **LIANG, Wei**
  **Changchun, Jilin 130022 (CN)**
• **ZHANG, Jiyang**
  **Changchun, Jilin 130022 (CN)**
• **CHEN, Qi**
  **Changchun, Jilin 130022 (CN)**
• **MU, Da**
  **Changchun, Jilin 130022 (CN)**
• **KONG, Shiyuan**
  **Changchun, Jilin 130022 (CN)**

(74) Representative: **Studio Torta S.p.A.**
**Via Viotti, 9**
**10121 Torino (IT)**

(54) **CALIBRATION METHOD FOR DELAY TIME NONLINEARITY OF OPTICAL DELAY SYSTEM**

(57) Provided is a method for calibrating the nonlinearity of delay time of optical delay system. Firstly, a polarized Michelson interference measuring system is constructed, the rotating optical delay system of the polarized Michelson interference measuring system includes a rotating prism and a rotating displacement table, and the rotating prism is driven by the rotating displacement table to rotate around a medial axis horizontally. The rotating prism is driven and rotated by the displacement table at a rotation interval β, and acquires corresponding interference fringe images in the CCD camera during the process of changing the angle of a single prism surface of the rotating prism. Based on the interference fringe images, an actual delay time of the rotation angle of a single prism surface of the rotating prism in the rotating optical delay system is obtained. The relationship between the rotation angle of the rotating prism body and the actual delay time using the least square method. Based on the least square method fitting relationship, the sensitivity relationship between the delay time of the rotating prism body and the angle of the rotating displacement table is established in the rotating optical delay system, thereby realizing calibrating the non-linear of the rotation optical delay system delay time and the encoder selection of rotating optical delay system.

EP 4 350 536 A1

Constructing a polarized Michelson interference measuring system based on a solid model of the fast optical delay system

↓

Acquiring a variation of interference fringes at the corresponding rotation angle of the fast optical delay system

↓

Obtaining an actual delay time of rotation angle of the fast optical delay system

↓

Fitting the relationship between the rotation angle and the actual delay time using least square method

↓

Constructing a relationship model between the delay time and the working angle of the fast optical delay system to calibrate the nonlinearity

FIG. 1

**Description**

The application claims priority to Chinese patent Application No. 202210986603.8, filed on August 17, 2022, entitled "Method for Calibrating Nonlinearity of Delay Time of Optical Delay System", all content of which is incorporated herein by reference in its entirety.

**TECHNICAL FIELD**

The present disclosure relates to a method for calibrating nonlinearity of delay time of optical delay system, and in particular to suitable for a nonlinear fast rotating optical delay system with high requirements for delay line processing and installation precision in optical detection system such as terahertz time-domain spectroscopic, optical coherence tomography, ultra-fast temporal resolution spectroscopic, and pump-probe.

**BACKGROUND**

An optical delay system can change the relative delay time of reference light and detecting light in the optical detection system, and has been widely used in technologies such as terahertz time-domain spectroscopic, optical coherence tomography, ultra-fast temporal resolution spectroscopic, and pump-probe. Optical delay system is also a key subsystem that affects the accuracy of signal acquisition, signal-to-noise ratio, and spectral resolution.

The fast optical delay system utilizes motors to drive the rotation of reflection structures, such as multiple reflecting mirrors, non-planar total reflecting mirrors or rotating cubes, to generate a periodically changing optical path. Typical fast optical delay system includes involute profiled rotating optical delay system, helicoid rotating optical delay system and polygonal prism optical delay system, etc. The fast optical delay system can scan the optical detection system fast, with a maximum scanning frequency exceeding 1kHz. However, due to the limitation of surface shape, delay time of the fast optical delay system has poor linearity. The degree of nonlinearity of delay time of the optical delay system directly affects the accuracy and consistency of the sampled signal of the optical detection system. The nonlinear delay time causes a nonlinear change in the optical path of the detecting light pulse, and further leads to a nonlinear appearance of the sampled signal. The greater the nonlinearity of the sampled signal of the system, the more severe the distortion of the acquired signal, and the greater the difficulty of subsequent data processing. In order to achieve high-precision measurement of the optical detection system, it is urgently necessary to calibrate the nonlinearity of the delay time caused by system design and low precision, during actual processing and installation, of the fast optical delay system.

At present, the research on signal errors of the optical detection system mostly focuses on using algorithms to calibrate the delay time errors of the acquired signal in the later data processing stage. However, for the fast optical delay system, there are parallelism error of the reflector, flatness error of the reflecting surface of the reflector, and position error of the reflector during actual processing, as well as transverse and longitudinal eccentricity errors during installation. These errors result in more complex distortion of the sampled signal. Therefore, it is necessary to calibrate the nonlinearity of the actual delay time of the rotating optical delay system after processing and installation. In the Reference [DOI: 10.1364/OE.25.07547], a Mach-Zehnder interferometer with an optical path coaxial with the terahertz time-domain spectroscopic system is constructed, which can directly obtain the optical delay time of terahertz waveform under the linear delay line. However, due to the use of the same beam splitter prism in the optical path of the interferometer and the terahertz time-domain spectroscopic system, it is not only required that the optical path of the terahertz time-domain spectroscopic system must be spatial optical path, but also be close to the wavelength of the interferometer, which further increases the complexity of the optical path structure of the interferometer and greatly increases the difficulty of optical path adjustment. Therefore, a more flexible, simple, and easily adjustable interferometer system is required to calibrate the delay time of rotating delay line.

Therefore, a method for calibrating the nonlinearity of delay time of optical delay system is desperately desired to reduce the impact of low precision, during actual processing and installation, of the rotating optical delay system on the nonlinearity of the system.

**SUMMARY**

In order to solve the above problems in the existing technology, the present disclosure provides a method for calibrating the nonlinearity of delay time of optical delay system to reduce the impact of nonlinearity of the delay time caused by low precision, during actual processing and installation, of the rotating optical delay system on signal acquisition. The method can be applied to the calibration of different types of fast optical delay systems.

The present disclosure is achieved through the following technical solution:

A method for calibrating the nonlinearity of delay time of optical delay system, including the following steps:

Step 1: construction of a polarized Michelson interference measuring system: the polarized Michelson interference measuring system includes a light source system, a beam splitter system, a reference arm system, a measurement arm system, and an interference system; the measurement arm system includes a rotating optical delay system, which includes a rotating prism and a rotating displacement table; the rotating prism is coaxially fixed on the rotating displacement table, and is driven by the rotating displacement table to rotate around a medial axis horizontally; after a laser beam L1 emitted by the light source system reaches the beam splitter system, it is divided into a reference arm beam L2 and a measurement arm beam L3 by a polarized beam splitter prism; the reference arm beam L2 enters the reference arm system and is reflected back to the polarized beam splitter prism; the measurement arm beam L3 enters the measurement arm system, reaches the rotating prism in the rotating optical delay system and is reflected by a prismatic surface of the rotating prism, and finally, the measurement arm beam L3 is reflected once again and returns to the polarized beam splitter prism. An angle and a position of the planar reflecting mirror of the reference arm system is adjusted, such that the reference arm beam L2 returned through the reference arm system and the measurement arm beam L3 returned through the measurement arm system are refracted and reflected by the polarized beam splitter prism and then converged into an interference beam L4; and the interference beam L4 enters the interference system and generates interference fringes on a Charge Coupled Device, CCD, camera of the interference system.

Step 2: the rotating prism is driven and rotated by the displacement table at a rotation interval $\beta$, and acquires corresponding interference fringe images in the CCD camera during the process of changing the angle of a single prism surface of the rotating prism.

Step 3: the interference fringe images acquired in the step 2 is processed to obtain an actual delay time of the rotation angle of the single prism surface of the rotating prism in the rotating optical delay system.

Step 4: the relationship between the rotation angle $\gamma_i$ and the actual delay time $t_i$ of the rotating prism in the rotating optical delay system is fitted using least square method: the steps 2 to 3 are repeated several times, and the average delay time acquired from several repeated measurements of the rotation angle $\gamma_i$ of the single prism surface of the rotating prism is used as the actual delay time $t_i$ of the prism surface, and the relationship between the rotation angle $\gamma_i$ and the actual delay time $t_i$ of the single prism surface of the rotating prism is fitted using least square method; the above steps are repeated for all prism surfaces of the rotating prism to acquire a least square fitting relationship between the rotation angle and the actual delay time of each prism surface of the rotating prism.

Step 5: based on the least square fitting relationship in the step 4, a sensitivity relationship between the delay time of the rotating prism of the rotating optical delay system and the angle of the rotating displacement table is constructed, thereby achieving the calibration for the nonlinearity of the delay time of the rotating optical delay system and the selection for an encoder of the rotating optical delay system.

In an embodiment, the light source system of the polarized Michelson interference measuring system includes a helium-neon laser, a lens, and a polarizer provided along the direction of an optical axis of the helium-neon laser, the lens, and the polarizer in turn. The reference arm system includes a first 1/4 wave plate and a planar reflecting mirror provided along an optical axis of the first 1/4 wave plate and the planar reflecting mirror. The measurement arm system includes a second 1/4 wave plate and a rotating optical delay system provided along an optical axis of the second 1/4 wave plate and the rotating optical delay system. The rotating optical delay system includes a lens, a fixed planar reflecting mirror, a rotating prism, and a rotating displacement table, and the lens and the fixed planar reflecting mirror are provided along a reflecting optical path of the rotating prism in turn. The interference system includes an analyzer and a CCD camera provided along an optical axis of the analyzer and the CCD camera. The laser beam L1 emitted by the helium-neon laser is expanded by the lens and the polarizer, and converted into a polarized light. The polarized light is divided into the reference arm beam L2 and the measurement arm beam L3 by the polarized beam splitter prism after reaching the beam splitter system. The reference arm beam L2 enters the reference arm system, and returns to the polarized beam splitter prism of the beam splitter system after passing through the 1/4 wave plate and the planar reflecting mirror in turn. The measurement arm beam L3 enters the measurement arm system, reaches the rotating prism of the rotating optical delay system after passing through the 1/4 wave plate, and is reflected from the prism surface of the rotating prism to the lens, finally, the measurement arm beam L3 is reflected by the fixed reflecting mirror and then returns to the polarized beam splitter prism of the beam splitter system along the original path. The angle and position of the planar reflecting mirror of the reference arm system are adjusted, such that the reference arm beam L2 returned through the reference arm system and the measurement arm beam L3 returned through the measurement arm system are converged into the interference beam L4 after being refracted and reflected by the polarized beam splitter prism. The interference beam L4 enters the interference system, passes through the analyzer and finally reaches the CCD camera, so as to acquire the interference fringes on the CCD camera.

In an embodiment, the helium-neon laser is a helium-neon laser 1 with a wavelength of 632.8nm.

Further, the step 2 includes the following sub-steps:

Sub-step 2.1) The directions of the optical axes of the reference arm system, measurement arm system, the interference system and the position of the CCD camera are adjusted until the interference fringes are located in the central area of the CCD camera.

Sub-step 2.2) The rotating displacement table is fine-tuned with the rotation angle interval β, and the rotating prism is driven to rotate; during the process of changing the angle of the rotating prism, the changing images of the corresponding interference fringes are continuously acquired by the CCD camera.

Sub-step 2.3) The rotating displacement table continuously drives the rotating prism to rotate with the rotation angle interval β until the rotating prism rotates a working angle of the single prism surface of the rotating prism. During the rotation of the rotating displacement table with the rotation angle interval β, the CCD camera records the interference fringe images of the single prism surface of the rotating prism when the rotating prism rotates $i$ times at the working angle, where $i$ represents the number of times the rotating displacement table rotates with the rotation angle interval β.

Furthermore, the step 3 includes the following sub-steps:

Sub-step 3.1) In each frame of the interference fringe images acquired by the CCD camera, an interference level at the position of a center ring is set to be $m$, and an interference level near the center ring is set to be $m$ - 1. The $m$ - 1 level fringe is selected as an observed object, and the average gray value $p$ of a square area, with the width $d$ of the $m$ - 1 level fringe as the side length, on the interference fringe image is calculated. During the rotation of the rotating prism with the rotation angle interval β, the corresponding gray value $p_j$ of each frame of the interference fringe images on the square area is recorded, and during the entire angular rotation process with the rotation angle interval β, where $N$ represents the total number of frames of the acquired interference fringe images, and $j$ represents the $j^{th}$ frame of the images.

Sub-step 3.2) The average gray scale value $p_l$ when an area of bright and an area of dark fringes are both equal to half of an area of the square area is recorded as a threshold, during the change of the fringes of the interference fringe images, using the floating threshold method.

Sub-step 3.3) During the rotation of the rotating prism with the rotation angle interval β, the case that the gray scale value $p_j$ of the $j^{th}$ frame of the acquired images is greater than the threshold $p_l$ is denoted as 1, and the case that the gray scale value $p_j$ is less than the threshold $p_l$ is denoted as 0; and a fringe variation $\Delta$ during the rotation of the rotating prism with the rotation angle interval β is recorded as:

$$\Delta = \frac{1}{2(number\ of\ gray\ scale\ values\ that\ change\ from\ 0\ to\ 1 + number\ of\ gray\ scale\ values\ that\ change\ from\ 1\ to\ 0)} \quad (1)$$

Sub-step 3.4) The above sub-steps 3.1) to 3.3) are repeated, and during the angle change of the single prism surface of the rotating optical delay system with the rotation angle interval β, the gray value of the fixed area in the interference image is converted into the fringe variation.

Sub-step 3.5) *actual delay time $t_i$ = fringe variation $\Delta \times$ wavelentgh $\lambda$* ; finally, the fringe variation $\Delta$, during the angle rotation of the rotating prism with each rotation angle interval β, is converted into the delay time $t_i$, and the corresponding relationship between the rotation angle $\gamma_i$ and the actual delay time $t_i$ of the rotating prism is further obtained, where $i$ represents the number of times the rotating displacement table rotates with the rotation angle interval β, and $\gamma_i$ represents the rotation angle of the single prism surface of the rotating prism.

Furthermore, the step 4 includes the following sub-steps:

Sub-step 4.1) The steps 2 to 3 are repeated for several times, and the corresponding average actual delay time corresponding to the rotation of the rotation angle of the single prism surface of the rotating prism with the rotation angle interval β is calculated.

Sub-step 4.2) The average delay time calculated in the step 4.1) is used as the actual delay time $t_i$ of the rotation angle $\gamma_i$ of the single prism surface of the rotating prism, and the relationship between the rotation angle and the actual delay time of the single prism surface of the rotating prism is fitted using least square method; the relationship model obtained by the least square method is as follows:

$$t_i' = a\gamma_i + b \quad\quad\quad (2)$$

$$a = \frac{n\sum\gamma_i t_i - \sum\gamma_i \sum t_i}{n\sum\gamma_i^2 - (\sum\gamma_i)^2} \qquad (3)$$

$$b = \frac{\sum\gamma_i^2 \sum t_i - \sum\gamma_i \sum\gamma_i t_i}{n\sum\gamma_i^2 - (\sum\gamma_i)^2} \qquad (4)$$

where $t_i$ represents the actual delay time obtained by testing the single prism surface of the rotating prism;

$t_i'$ represents the fitted delay time;

$\gamma_i$ represents the rotation angle of the single prism surface of the rotating prism;

$n$ represents the number of data to be fitted;

$i$ represents the number of times of the rotation of the rotating displacement table with the rotation angle interval $\beta$;

$a$ represents the sensitivity of the fitted delay time to the rotation angle of the rotating prism.

Sub-step 4.3) The sub-steps 4.1) to 4.2) are repeated until the relationship between the rotation angle $\gamma_i$ and the actual delay time $t_i$ of all prism surfaces of the rotating prism is fitted using least square method, and thus the sensitivity $a_k$ of the fitted delay time of all prism surfaces to the rotation angle is obtained, where $k$ is the $k^{th}$ prism surface of the rotating prism.

In an embodiment, the rotation angle interval $\beta$ is 0.1°.

Furthermore, the step 5 includes the following sub-steps:

Based on the least square fitting relationship, obtained in the step 4, between the rotation angle and the actual delay time of each prism surface of the rotating prism, the fitted correspondence between the actual delay time of each prism surface of the rotating prism and the rotation angle of the rotating displacement table in the rotating optical delay system is obtained to calibrate the nonlinearity of the rotating optical delay system.

To meet the requirement of the minimum sampling interval $\Delta t_{min}$ of the optical detection system, the minimum resolution $\Delta\theta_{min}$ of the encoder of the rotating optical delay system satisfies:

$$\Delta\theta_{min} \leq \frac{\Delta t_{min}}{\alpha_{max}} \qquad (5)$$

where $\alpha_{max}$ represents the maximum sensitivity, fitted based on the least square method, in each prism surface of the rotating prism.

The present disclosure has the following advantages:

The present disclosure can calibrate the nonlinearity caused by low precision in the processing and assembling of the fast optical delay system in the optical detection system, effectively reduce the precision requirement of the optical detection system for processing and assembling of the fast rotating optical delay system, and provide a foundation for promoting the widespread application of the fast rotating optical delay system.

For systems with high precision requirement in fast rotating optical delay systems, the present disclosure has excellent calibration effect of the nonlinearity, which can significantly reduce the processing cost of the rotating optical delay system and has wide practicality.

## BRIEF DESCRIPTION OF DRAWINGS

In order to clearly illustrate the technical solution according to the embodiments of the present disclosure, the drawing used in the embodiments will be briefly introduced below. Obviously, the drawings in the following description are only some embodiments of the present disclosure. For those skilled in the art, other drawings can be obtained based on these drawings without any creative effort.

Fig.1 is a flowchart showing a method for calibrating nonlinearity of delay time of an optical delay system according to an embodiment of the present disclosure;

Fig. 2 is a schematic diagram showing an optical path of a polarized Michelson interference measuring system according to an embodiment of the present disclosure;

Fig. 3 is a side view of an optical path of a rotating optical delay system according to an embodiment of the present disclosure;

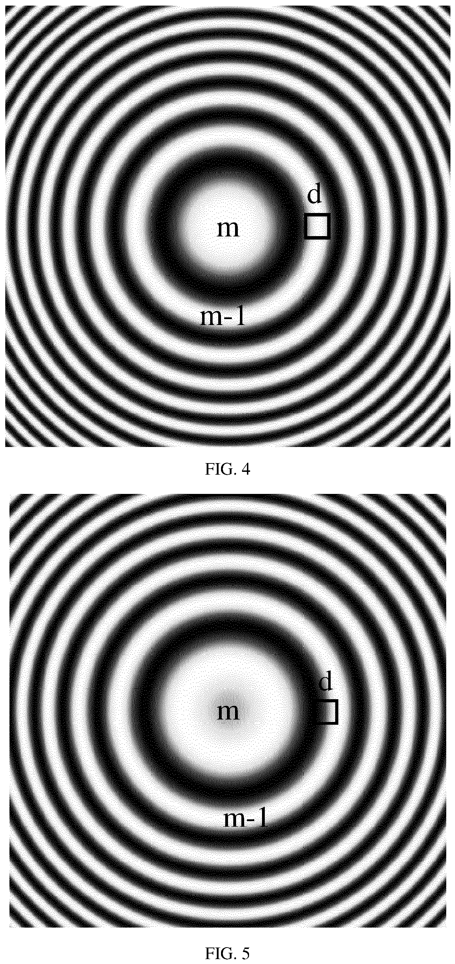

Fig. 4 is a schematic diagram showing a gray scale calculation area of acquired interference fringe images according to an embodiment of the present disclosure; and

Fig. 5 is a schematic diagram showing a gray scale threshold calculation area of acquired interference fringe images according to an embodiment of the present disclosure.

## DESCRIPTION OF EMBODIMENTS

The present disclosure will be further illustrated through specific embodiments. The following embodiments are only illustrative and not restrictive, and cannot be used to limit the protection scope of the present disclosure.

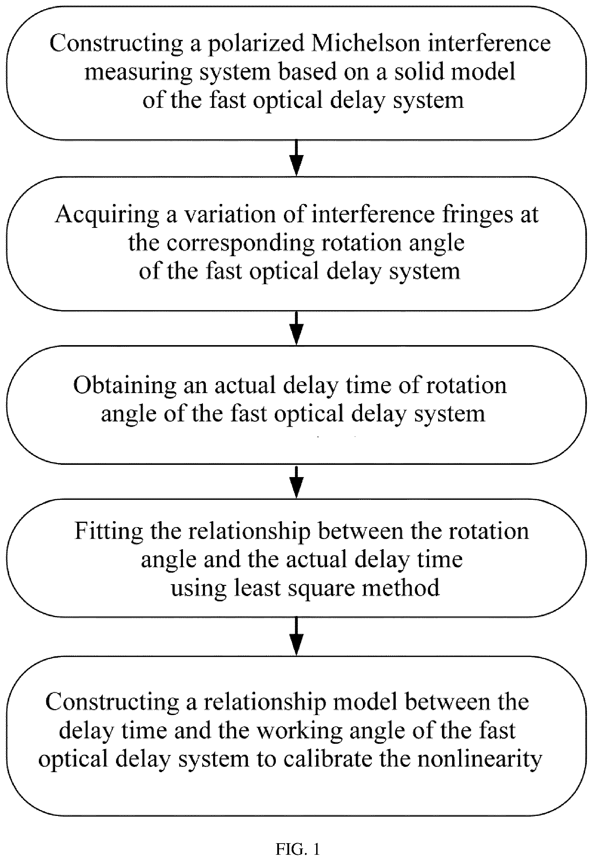

As shown in Fig. 1, this embodiment provides a method for calibrating the nonlinearity of delay time of optical delay system, including the following steps:

Step 1: construction of a polarized Michelson interference measuring system:

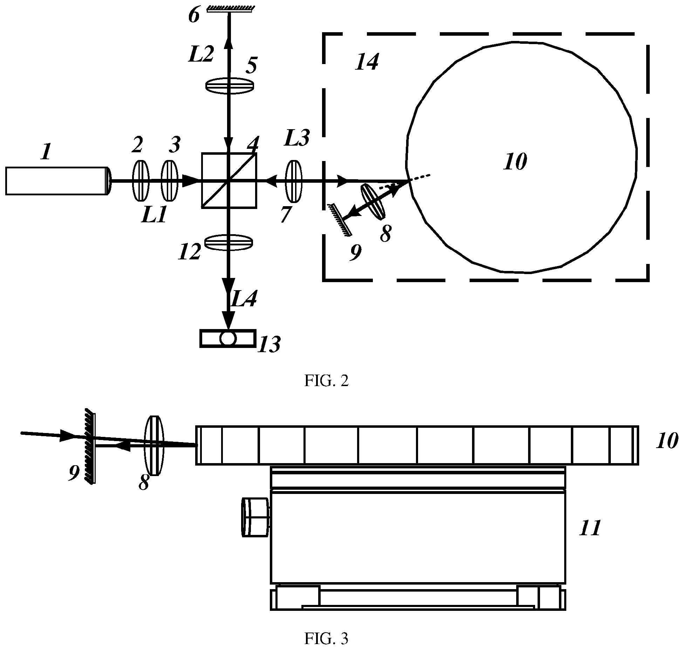

As shown in Figs. 2 and 3, the polarized Michelson interference measuring system includes five parts: a light source system, a beam splitter system, a reference arm system, a measurement arm system, and an interference system. The measurement arm system includes a rotating optical delay system 14, and the rotating optical delay system 14 includes a rotating prism 10, and a rotating displacement table 11. The rotating prism 10 is coaxially fixed on the rotating displacement table 11, and is driven by the rotating displacement table 11 to rotate horizontally around a medial axis. After a laser beam L1 emitted by the light source system reaches the beam splitter system, it is divided into a reference arm beam L2 and a measurement arm beam L3 by a polarized beam splitter prism 4. The reference arm beam L2 enters the reference arm system, and is reflected back to the polarized beam splitter prism 4. The measurement arm beam L3 enters the measurement arm system, reaches the rotating prism 10 in the rotating optical delay system 14 and is reflected by a prismatic surface of the rotating prism 10, and finally returns to the polarized beam splitter prism 4 after being reflected once again along the original path. The reference arm beam L2 returned through the reference arm system and the measurement arm beam L3 returned through the measurement arm system are converged into an interference beam L4 after being refracted and reflected by the polarized beam splitter prism 4. The interference beam L4 enters the interference system and generates interference fringes on a CCD camera 13 of the interference system.

In an embodiment, the light source system includes a helium-neon laser 1, a lens 2, and a polarizer 3 provided along an optical axis in turn. The reference arm system includes a 1/4 wave plate 5 and a planar reflecting mirror 6 provided along an optical axis. The measurement arm system includes a 1/4 wave plate 7 and a rotating optical delay system 14 provided along an optical axis. The interference system includes an analyzer 12 and a CCD camera 13 provided along an optical axis.

The rotating optical delay system 14 includes a lens 8, a fixed planar reflecting mirror 9, a rotating prism 10, and a rotating displacement table 11. The rotating prism 10 is coaxially fixed on the rotating displacement table 11, and is driven by the rotating displacement table 11 to rotate around a medial axis in a horizontal plane. The lens 8 and the fixed planar reflecting mirror 9 are provided along a reflecting optical path of the rotating prism 10 in turn.

In order to ensure the stability of the interference fringes, a high power stability of the interference light source is necessary for the polarized Michelson interference measuring system. The helium-neon laser 1 with a wavelength of 632.8nm is preferred.

In the light source system, the laser beam L1 emitted by the helium-neon laser 1 is expanded by the lens 2 and the polarizer 3, and then converted into a polarized light. The polarized light is divided into the reference arm beam L2 and the measurement arm beam L3 by the polarized beam splitter prism 4 after reaching the beam splitter system. The reference arm beam L2 enters the reference arm system, passes through the 1/4 wave plate 5 and the planar reflecting mirror 6 in turn, and finally returns to the polarized beam splitter prism 4 of the beam splitter system. The measurement arm beam L3 enters the measurement arm system, passes through the 1/4 wave plate 7, reaches the rotating prism 10 of the rotating optical delay system 14 and then is reflected from the prism surface of the rotating prism 10 to the lens 8, and finally returns to the polarized beam splitter prism 4 of the beam splitter system through the fixed reflecting mirror 9 along the original path. The angle and position of the planar reflecting mirror 6 of the reference arm system are adjusted, such that the reference arm beam L2 returned through the reference arm system and the measurement arm beam L3 returned through the measurement arm system are converged into the interference beam L4 after being refracted and reflected by the polarized beam splitter prism 4. The interference beam L4 enters the interference system, passes through the analyzer 13 and finally reaches the CCD camera 13. The interference fringes are acquired on the CCD camera 13.

Step 2: the rotating prism 10 is driven and rotated by the displacement table 11 at a rotation interval 0.1°, and acquires corresponding interference fringe images in the CCD camera 13 during the process of changing an angle of a single prism surface of the rotating prism 10.

2.1) The directions of the optical axes of the 1/4 wave plate 5, the 1/4 wave plate 7, and the analyzer 12, and the position of the CCD camera 13 are adjusted until the interference fringes are located in the central area of the CCD camera 13, and the interference fringes at all levels at the central area are clear and stable, with a large fringe spacing and a high contrast.

2.2) The rotating displacement table 11 is fine-tuned stably and slowly with the rotation angle interval 0.1°, and the rotating prism 10 is driven to rotate. During the process of changing the angle of the rotating prism 10, the changing images of the corresponding interference fringes are continuously acquired by the CCD camera 13.

2.3) The rotating displacement table 11 continuously drives the rotating prism 10 to rotate with the rotation angle interval 0.1° until the rotating prism 10 rotates for a working angle of the single prism surface of the rotating prism 10. During the rotation of the rotating displacement table 11 with the rotation angle interval 0.1°, the CCD camera 13 records the interference fringe images of the single prism surface of the rotating prism 10 which rotates i times at the working angle, where i is the number of times for which the rotating displacement table rotates with the rotation angle interval 0.1°.

Step 3: An actual delay time of the rotation angle of the single prism surface of the rotating prism 10 in the rotating optical delay system 14 is obtained.

3.1) In each frame of the interference fringe images acquired by the CCD camera 13, an interference level at the position of a center ring is set to be $m$, and an interference fringe level near the center ring is set to be $m$ - 1. The $m$ - 1 level fringe is selected as an observed object, and the average gray value $p$ of a square area, with the width $d$ of the $m$ - 1 level fringe as the side length, on the interference fringe image is calculated. During the rotation of the rotating prism 10 with the rotation angle interval 0.1°, the corresponding gray value $p_j$ of each frame of the interference fringe images on the square area is recorded. During the entire angular rotation process with the rotation angle interval 0.1°, the total number of frames of the acquired interference fringe images is $N$, where $j$ represents the $j^{th}$ frame of the images.

3.2) The average gray scale value $p_l$ when the area of bright and dark fringes is equal to half of the area of the square area is recorded as a threshold, during the change of the fringes of the interference fringe images, using the floating threshold method.

3.3) During the rotation with the rotation angle interval 0.1°, the case that the gray scale value $p_j$ of the $j^{th}$ frame of the acquired images is greater than the threshold $p_l$ is denoted as 1, and the case that the gray scale value $p_j$ is less than the threshold $p_l$ is denoted as 0; and a fringe variation $\Delta$ during the rotation of the rotating prism 10 with the rotation angle interval 0.1° is recorded as:

$$\Delta = \frac{1}{2(\text{the number of gray scale values that change from 0 to 1} + \text{the number of gray scale values that change from 1 to 0})} \quad (1)$$

3.4) The above steps 3.1) to 3.3) are repeated, and during the angle change of the single prism surface of the rotating optical delay system 14 with the rotation angle interval 0.1°, the gray value of the fixed area in the interference image is converted into the fringe variation.

3.5) *actual delay time $t_i$ = fringe variation $\Delta \times$ wavelentgh $\lambda$*; finally, the fringe variation $\Delta$, during the angle rotation of the rotating prism 10 with each rotation angle interval 0.1°, is converted into the delay time $t_i$, and the corresponding relationship between the rotation angle $\gamma_i$ and the actual delay time $t_i$ of the rotating prism 10 is further obtained, where i represents the number of times for which the rotating displacement table rotates with the rotation angle interval 0.1°, and $\gamma_i$ represents the rotation angle of the single prism surface of the rotating prism 10.

Step 4: The relationship between the rotation angle $\gamma_i$ and the actual delay time $t_i$ of the rotating prism 10 in the rotating optical delay system 14 is fitted using least square method: the steps 2 to 3 are repeated, and the average delay time acquired from three repeated measurements of the rotation angle $\gamma_i$ of the single prism surface of the rotating prism 10 is taken as the actual delay time $t_i$ of the prism surface, and the relationship between the rotation angle $\gamma_i$ and the actual delay time $t_i$ of the single prism surface of the rotating prism 10 is fitted using the least square method; and the above steps are repeated for all prism surfaces of the rotating prism 10 to acquire a least square fitting relationship between the rotation angle and the actual delay time of each prism surface of the rotating prism 10.

4.1) The steps 2 to 3 are repeated three times, and during the rotation of the rotation angle of the single prism surface of the rotating prism 10 with the rotation angle interval 0.1°, the average value of the corresponding actual delay time is calculated.

4.2) The average delay time calculated in the step 4.1) is taken as the actual delay time $t_i$ of the rotation angle $\gamma_i$ of the single prism surface of the rotating prism 10, and the relationship between the rotation angle and the actual delay time of the single prism surface of the rotating prism 10 is fitted using least square method. The relationship model obtained by the least square method is as follows:

$$t_i' = a\gamma_i + b \qquad (2)$$

$$a = \frac{n\sum \gamma_i t_i - \sum \gamma_i \sum t_i}{n\sum \gamma_i^2 - (\sum \gamma_i)^2} \tag{3}$$

$$b = \frac{\sum \gamma_i^2 \sum t_i - \sum \gamma_i \sum \gamma_i t_i}{n\sum \gamma_i^2 - (\sum \gamma_i)^2} \tag{4}$$

where $t_i$ represents the actual delay time obtained by testing the single prism surface of the rotating prism 10;

$t_i'$ represents the fitted delay time;

$\gamma_i$ represents the rotation angle of the single prism surface of the rotating prism 10;

$n$ represents the number of data to be fitted;

$i$ represents the number of times for which the rotating displacement table rotates with the rotation angle interval 0.1°;

$a$ represents the sensitivity of the fitted delay time to the rotation angle of the rotating prism.

4.3) The sub-steps 4.1) to 4.2) are repeated until the relationship between the rotation angle $\gamma_i$ and the actual delay time $t_i$ of all prism surfaces (there are 24 prism surfaces in this embodiment) of the rotating prism 10 is fitted using least square method, and thus the sensitivity $a_k$ of the fitted delay time of 24 prism surfaces to the rotation angle is obtained, where $k$ represents the $k^{th}$ prism surface of the rotating prism.

Step 5: Based on the least square fitting relationship in the step 4, a sensitivity relationship between the delay time of the rotating prism of the rotating optical delay system 14 and the angle of the rotating displacement table 11 is constructed, thereby achieving the calibration for the nonlinearity of the delay time of the rotating optical delay system 14 and the selection for an encoder of the rotating optical delay system.

5.1) Due to machining and assembly errors on different working surfaces, the corresponding relationship between the actual delay time and the rotation angle of each prime surface of the rotating prism is different from each other, and therefore the nonlinearity of the delay time of each prism surface is also different from each other.

5.2) Based on the least square fitting formula (2) between the rotation angle and the actual delay time of the single prism surface of the rotating prism 10, the fitted correspondence between the actual delay time of 24 prism surfaces of the rotating prism 10 and the rotation angle of the rotating displacement table 11 in the rotating optical delay system 14 is obtained to calibrate the nonlinearity of the rotating optical delay system 14.

5.3) Based on a sensitivity relationship model between the rotation angle and the actual delay time of each prism surface of the rotating prism 10 in the rotating optical delay system 14, it can be seen that the sensitivity a of the delay time in practical work to the rotation angle is not entirely the same with each other. Therefore, with the same sampling interval, the rotating prism 10 of the rotating optical delay system 14 generates the same delay time for each prism, and the required rotation angle for each prism is also different from each other. To meet the requirement of the minimum sampling interval $\Delta t_{min}$ of the optical detection system, the minimum resolution $\Delta \theta_{min}$ of the encoder of the rotating optical delay system satisfies:

$$\Delta \theta_{min} \leq \frac{\Delta t_{min}}{\alpha_{max}} \tag{5}$$

where $\alpha_{max}$ represents the maximum sensitivity, fitted based on least square method, in each prism surface of the rotating prism 10.

**Claims**

1. A method for calibrating nonlinearity of delay time of optical delay system, comprising:

step 1: constructing a polarized Michelson interference measuring system, wherein the polarized Michelson interference measuring system comprises a light source system, a beam splitter system, a reference arm system, a measurement arm system, and an interference system; the measurement arm system comprises a rotating optical delay system, the rotating optical delay system comprises a rotating prism and a rotating displacement table; the rotating prism is coaxially fixed on the rotating displacement table, and is driven by the rotating displacement table to rotate around a medial axis horizontally; after a laser beam L1 emitted by the light source system reaches the beam splitter system, the laser beam L1 is divided into a reference arm beam L2 and a measurement arm beam L3 by a polarized beam splitter prism; the reference arm beam L2 enters the reference arm system and is reflected back to the polarized beam splitter prism; the measurement arm beam L3 enters the measurement arm system, reaches the rotating prism in the rotating optical delay system, reflected by a prismatic surface of the rotating prism, and returns to the polarized beam splitter prism along an initial path after being reflected; the reference arm beam L2 returned through the reference arm system and the measurement arm beam L3 returned through the measurement arm system are converged into an interference beam L4 after being refracted and reflected by the polarized beam splitter prism; and the interference beam L4 enters the interference system and generates interference fringes on a charge coupled device, CCD, camera of the interference system;

step 2: driving, by the displacement table, the rotating prism to rotate at a rotation interval β, and acquiring interference fringe images in the CCD camera corresponding to a rotation angle change of a single prism surface of the rotating prism;

step 3: processing the interference fringe images acquired in the step 2 to obtain an actual delay time of a rotation angle of the single prism surface of the rotating prism in the rotating optical delay system;

step 4: fitting a relationship between the rotation angle $\gamma_i$ and the actual delay time $t_i$ of the rotating prism in the rotating optical delay system using least square method, comprising: repeating the steps 2 to 3 several times, and taking an average delay time acquired from several repeated measurements of the rotation angle $\gamma_i$ of the single prism surface of the rotating prism as the actual delay time $t_i$ of the prism surface, fitting the relationship between the rotation angle $\gamma_i$ and the actual delay time $t_i$ of the single prism surface of the rotating prism using least square method, and repeating the above steps for all prism surfaces of the rotating prism to acquire a least square fitting relationship between an rotation angle and an actual delay time of each prism surface of the rotating prism; and

step 5: constructing, based on the least square fitting relationship in the step 4, a sensitivity relationship between the delay time of the rotating prism of the rotating optical delay system and the angle of the rotating displacement table, so as to calibrate nonlinearly of the delay time of the rotating optical delay system and the selection for an encoder of the rotating optical delay system.

2. The method for calibrating the nonlinearity of delay time of optical delay system according to claim 1, wherein the light source system of the polarized Michelson interference measuring system comprises a helium-neon laser, a lens, and a polarizer provided along an optical axis of the helium-neon laser, the lens, and the polarizer in turn; the reference arm system comprises a first 1/4 wave plate and a planar reflecting mirror provided along an optical axis of the first 1/4 wave plate and the planar reflecting mirror; the measurement arm system comprises a second 1/4 wave plate and a rotating optical delay system provided along an optical axis of the second 1/4 wave plate and the rotating optical delay system; the rotating optical delay system comprises a lens, a fixed planar reflecting mirror, a rotating prism, and a rotating displacement table, and the lens and the fixed planar reflecting mirror are provided along a reflecting optical path of the rotating prism in turn; the interference system comprises an analyzer and a CCD camera provided along an optical axis of the analyzer and the CCD camera; the laser beam L1 emitted by the helium-neon laser is expanded by the lens and the polarizer, and converted into a polarized light; the polarized light is divided into the reference arm beam L2 and the measurement arm beam L3 by the polarized beam splitter prism after reaching the beam splitter system; the reference arm beam L2 enters the reference arm system, and returns to the polarized beam splitter prism of the beam splitter system after passing through the 1/4 wave plate and the planar reflecting mirror in turn; the measurement arm beam L3 enters the measurement arm system, reaches the rotating prism of the rotating optical delay system after passing through the 1/4 wave plate, reflected from the prism surface of the rotating prism to the lens, and finally returns to the polarized beam splitter prism of the beam splitter system along the original path after being reflected by the fixed planar reflecting mirror; an angle and a position of the planar reflecting mirror of the reference arm system is adjusted, such that the reference arm beam L2 returned through the reference arm system and the measurement arm beam L3 returned through the measurement arm system are converged into the interference beam L4 after being refracted and reflected by the polarized beam splitter prism; and the interference beam L4 enters the interference system, passes through the analyzer, reaches the CCD camera, so as to acquire the interference fringes on the CCD camera.

3. The method for calibrating the nonlinearity of delay time of optical delay system according to claim 2, wherein the helium-neon laser is a helium-neon laser with a wavelength of 632.8nm.

4. The method for calibrating the nonlinearity of delay time of optical delay system according to claim 1, wherein the step 2 comprises:

sub-step 2.1) adjusting directions of optical axes of the reference arm system, measurement arm system and the interference system and a position of the CCD camera until the interference fringes are located in a central area of the CCD camera;

sub-step 2.2) fine-tuning the rotating displacement table with the rotation angle interval β, driving the rotating prism to rotate, and acquiring, by the CCD camera, the interference fringe images corresponding to the rotation angle change of the rotating prism; and

sub-step 2.3) driving, by the rotating displacement table continuously, the rotating prism to rotate with the rotation angle interval β until the rotating prism rotates for a working angle of the single prism surface of the rotating prism, and recording, by the CCD camera, interference fringe images of the single prism surface of the rotating prism when the rotating prism rotates for *i* times at the working angle, during rotation of the rotating displacement table with the rotation angle interval β, wherein *i* represents a number of times of the rotation of the rotating displacement table with the rotation angle interval β.

5. The method for calibrating the nonlinearity of delay time of optical delay system according to claim 1, wherein the step 3 comprises:

sub-step 3.1) in each frame of the interference fringe images acquired by the CCD camera, setting an interference level at a position of a center ring as *m,* and setting an interference level near the center ring as *m* - 1, selecting the *m* - 1 level fringe as an observed object, and calculating an average gray value *p* of a square area, with a width *d* of the *m* - 1 level fringe as a side length, on the interference fringe image, recording a gray value $p_j$ corresponding to each frame of the interference fringe images on the square area during rotation of the rotating prism rotates with the rotation angle interval β, wherein *N* represents a total number of frames of the acquired interference fringe images during the rotation of the rotating prism rotates with the rotation angle interval β, and *j* represents a $j^{th}$ frame of the images;

sub-step 3.2) setting an average gray scale value $p_l$ when an area of bright fringes and an area of dark fringes are both equal to half of an area of the square area as a threshold, using a floating threshold method, during a fringe change of the interference fringe images;

sub-step 3.3) during the rotation of the rotating prism with the rotation angle interval β, when the gray scale value $p_j$ of the $j^{th}$ frame of the acquired images is greater than the threshold $p_l$, denoting 1, and when the gray scale value $p_j$ is less than the threshold $p_l$, denoting 0; a fringe variation Δ during the rotation of the rotating prism with the rotation angle interval βis calculated as follows:

$$\Delta = \frac{1}{2(number\ of\ gray\ scale\ values\ that\ change\ from\ 0\ to\ 1 + number\ of\ gray\ scale\ values\ that\ change\ from\ 1\ to\ 0)} \quad (1)$$

sub-step 3.4) repeating the sub-step 3.1) to the sub-step 3.3), and during the angle change of the single prism surface of the rotating optical delay system with the rotation angle interval β, converting a gray value of a fixed area in an interference image into the fringe variation; and

sub-step 3.5) *actual delay time* $t_i$ = *fringe variation* Δ × *wavelentgh* λ, converting the fringe variation Δ, during the rotation of the rotating prism with each rotation angle interval β, into a delay time $t_i$, and obtaining a relationship between the rotation angle $\gamma_i$ and the actual delay time $t_i$ of the rotating prism, where *i* represents the number of times of the rotation of the rotating displacement table with the rotation angle interval β, and $\gamma_i$ represents the rotation angle of the single prism surface of the rotating prism.

6. The method for calibrating the nonlinearity of delay time of optical delay system according to claim 1, wherein the step 4 comprises the following sub-steps:

4.1) repeating the step 2 to the step 3 for several times, and calculating an average actual delay time corresponding to the rotation angle of the single prism surface of the rotating prism with the rotation angle interval β;

4.2) taking the average delay time obtained in the step 4.1) as the actual delay time $t_i$ of the rotation angle $\gamma_i$ of the single prism surface of the rotating prism, fitting the relationship between the rotation angle and the actual delay time of the single prism surface of the rotating prism using least square method, and obtain a relationship model obtained by the least square method as follows:

$$t_i' = a\gamma_i + b \qquad (2)$$

$$a = \frac{n\sum\gamma_i t_i - \sum\gamma_i\sum t_i}{n\sum\gamma_i^2 - (\sum\gamma_i)^2} \qquad (3)$$

$$b = \frac{\sum\gamma_i^2\sum t_i - \sum\gamma_i\sum\gamma_i t_i}{n\sum\gamma_i^2 - (\sum\gamma_i)^2} \qquad (4)$$

where $t_i$ represents the actual delay time obtained by testing the single prism surface of the rotating prism;

$t_i'$ represents a fitted delay time;

$\gamma_i$ represents the rotation angle of the single prism surface of the rotating prism;

$n$ represents a number of data to be fitted;

$i$ represents the number of times of the rotation of the rotating displacement table with the rotation angle interval $\beta$;

$a$ represents a sensitivity of the fitted delay time to the rotation angle of the rotating prism; and

4.3) repeating the sub-step 4.1) to the sub-step 4.2) until the relationship between the rotation angle $\gamma_i$ and the actual delay time $t_i$ of all prism surfaces of the rotating prism is fitted using the least square method, and obtaining the sensitivity $a_k$ of the fitted delay time of all prism surfaces to the rotation angle, where $k$ is a $k^{th}$ prism surface of the rotating prism.

7. The method for calibrating the nonlinearity of delay time of optical delay system according to any one of claims 1, 4, 5 and 6, wherein the rotation angle interval $\beta$ is 0.1°.

8. The method for calibrating the nonlinearity of delay time of optical delay system according to claim 1, wherein the step 5 comprises the following sub-steps:

based on the least square fitting relationship, obtained in the step 4, between the rotation angle and the actual delay time of each prism surface of the rotating prism, obtaining the fitted correspondence between the actual delay time of each prism surface of the rotating prism and the rotation angle of the rotating displacement table in the rotating optical delay system to calibrate the nonlinearity of the rotating optical delay system;

in order to meet requirement of a minimum sampling interval $\Delta t_{min}$ of an optical detection system, minimum resolution $\Delta\theta_{min}$ of the encoder of the rotating optical delay system satisfying:

$$\Delta\theta_{min} \leq \frac{\Delta t_{min}}{\alpha_{max}} \qquad (5)$$

where $\alpha_{max}$ represents a maximum sensitivity, fitted based on the least square method, in each prism surface of the rotating prism.

Constructing a polarized Michelson interference
measuring system based on a solid model
of the fast optical delay system

↓

Acquiring a variation of interference fringes at
the corresponding rotation angle
of the fast optical delay system

↓

Obtaining an actual delay time of rotation
angle of the fast optical delay system

↓

Fitting the relationship between the rotation
angle and the actual delay time
using least square method

↓

Constructing a relationship model between the
delay time and the working angle of the fast
optical delay system to calibrate the nonlinearity

FIG. 1

FIG. 2

FIG. 3

FIG. 4

FIG. 5

## INTERNATIONAL SEARCH REPORT

| International application No. |
|---|
| **PCT/CN2023/073108** |

**A.    CLASSIFICATION OF SUBJECT MATTER**

G06F17/18(2006.01)i;G01J9/02(2006.01)i

According to International Patent Classification (IPC) or to both national classification and IPC

**B.    FIELDS SEARCHED**

Minimum documentation searched (classification system followed by classification symbols)

IPC:G06F17; G01J9

Documentation searched other than minimum documentation to the extent that such documents are included in the fields searched

Electronic data base consulted during the international search (name of data base and, where practicable, search terms used)

CNTXT, ENTXTC, DWPI, VEN: 迈克尔逊, 干涉, 延迟, 时间, 旋转, 校正, 校准, 修正, 最小二乘, Michelson, interfer+, delay, time, rotat+, correct+, calibrat+, asjust+, least square, LSM

**C.    DOCUMENTS CONSIDERED TO BE RELEVANT**

| Category* | Citation of document, with indication, where appropriate, of the relevant passages | Relevant to claim No. |
|---|---|---|
| PX | CN 115420388 A (CHANGCHUN UNIVERSITY OF SCIENCE AND TECHNOLOGY et al.) 02 December 2022 (2022-12-02) claims 1-8 | 1-8 |
| A | DE 102017100850 A1 (CARL ZEISS AG) 19 July 2018 (2018-07-19) entire document | 1-8 |
| A | JP H10339604 A (YOSHINO TOSHIHIKO et al.) 22 December 1998 (1998-12-22) entire document | 1-8 |
| A | JP H10232105 A (JAPAN RADIO CO., LTD.) 02 September 1998 (1998-09-02) entire document | 1-8 |
| A | CN 105932531 A (INSTITUTE OF HIGH ENERGY PHYSICS, CHINESE ACADEMY OF SCIENCES) 07 September 2016 (2016-09-07) entire document | 1-8 |
| A | US 5811655 A (ADVANTEST CORPORATION) 22 September 1998 (1998-09-22) entire document | 1-8 |

☑ Further documents are listed in the continuation of Box C.    ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **23 March 2023** | **24 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| | International application No. |
| --- | --- |
| | **PCT/CN2023/073108** |

**C.    DOCUMENTS CONSIDERED TO BE RELEVANT**

| Category* | Citation of document, with indication, where appropriate, of the relevant passages | Relevant to claim No. |
| --- | --- | --- |
| A | 程爽 (CHENG, Shuang). "高分辨太赫兹时域光谱检测关键技术的研究 (Non-official translation: Research on Key Technology for High-Resolution Terahertz Time-Domain Spectroscopy Detection)" <br> 长春理工大学硕士论文集 *(Master's Theses of Changchun University of Science and Technology)*, 01 June 2021 (2021-06-01), <br>     pp. 1-50 | 1-8 |
| A | P. Haschberger et al. "Michelson Interferometer with a Rotating Retroreflector: Investigations on Special Features" <br> *Infrared Physics,* Vol. 31, No. 4, 31 August 1991 (1991-08-31), <br> ISSN: 0020-0891, <br>     pp. 351-362 | 1-8 |

Form PCT/ISA/210 (second sheet) (July 2022)

International application No.

**PCT/CN2023/073108**

| Patent document cited in search report | | | Publication date (day/month/year) | Patent family member(s) | | | Publication date (day/month/year) |
|---|---|---|---|---|---|---|---|
| CN | 115420388 | A | 02 December 2022 | None | | | |
| DE | 102017100850 | A1 | 19 July 2018 | None | | | |
| JP | H10339604 | A | 22 December 1998 | None | | | |
| JP | H10232105 | A | 02 September 1998 | None | | | |
| CN | 105932531 | A | 07 September 2016 | None | | | |
| US | 5811655 | A | 22 September 1998 | JPH | 0980124 | A | 28 March 1997 |
| | | | | DE | 19636916 | A1 | 13 March 1997 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210986603